## Europäisches Patentamt
## European Patent Office
## Office européen des brevets

(19)

(11) Publication number: **0 014 301**
**B1**

(12)

# EUROPEAN PATENT SPECIFICATION

(45) Date of publication of patent specification: **11.04.84**

(51) Int. Cl.³: **G 01 F 23/28, B 22 D 11/16**

(21) Application number: **79830053.9**

(22) Date of filing: **17.12.79**

(54) Level measurement device.

(30) Priority: **20.12.78 IT 8352678**

(43) Date of publication of application:
**20.08.80 Bulletin 80/17**

(45) Publication of the grant of the patent:
**11.04.84 Bulletin 84/15**

(84) Designated Contracting States:
**AT BE DE FR GB SE**

(56) References cited:
**US - A - 3 741 656**
**US - A - 3 838 727**
**US - A - 3 867 628**

**GLASS AND CERAMICS, vol. 32, no. 9/10, September/October 1975, New York US, V.M. KOMPAN et al. "Photoelectric indicator of melt level in glassmaking furnaces", pages 609-611 PRODUCT ENGINEERING, vol. 38, Ocotber 23, 1967, no. 22, "Liquid Level", page 75**

(73) Proprietor: **CEDA S.p.A.**
**Via Nazionale**
**I-33042 Buttrio (Udine) (IT)**

(72) Inventor: **Della Vedova, Ferruccio**
**Via Lignano, 2**
**Zugliano (Pozzuolo del Friuli) (IT)**

(74) Representative: **Petraz, Gilberto**
**G.L.P. S.a.s. di Gilberto Petraz P.le Cavedalis 6/2**
**I-33100 Udine (IT)**

Courier Press, Leamington Spa, England.

## Level measurement device

This invention concerns a device to measure the level of the surface of a substance such as molten metal, for instance.

The device of the invention finds applications in all cases where measurement of a level has to be made from a distance owing to toxicity, hazard, high temperature or other reasons.

One typical but not restrictive application is the measurement of the level of molten metal in an ingot mould in continuous casting processes.

In such measurement and when a protective powder is added on top of the bath, known systems do not ensure the required accuracy and speed of measurement.

Level measuring apparatus is disclosed in the following publications:— Glass and Ceramics, Vol. 32, No. 9/10 September/October 1975, New York, U.S.A.; V. M. Kompan et al. "Photoelectric indicator of melt level in glassmaking furnaces", pages 609—611, describes an apparatus to measure the level of a substance in a container which is based on the measurement of intensity of light reflected by the surface of which the level has to be measured.

A shutter with a rotating window positioned in front of a source of continuous light generates two pulses of the same frequency but 180° out of phase.

Each of these reflections from the surface strikes half of a photoelectric element. In this case no output signal is generated.

When the level changes, the parts of the sensor are no longer equally illuminated and the device generates a suitable signal at the outlet.

The use of moving parts makes this apparatus unreliable and the apparatus cannot provide an assurance of indifference to optical and mechanical disturbance as provided by the present invention.

US Patent 3,838,727 for Levi and Suckarczuk proposes a system for measurement of a molten metal level in a container based on the variation in the intensity of the reaction which strikes a detector when the level itself varies.

The detected radiation is emitted by the substance itself and the detector "sees" a portion of metal surface and a lateral part of the container through a window at the same time; when the level changes, the proportions between the surface of the metal and the container as seen by the detector also change and therefore a variation takes place in the intensity of the detected radiation.

This known apparatus does not use a suitable source of light and therefore can only be employed with molten metal baths not covered with dust and in smokeless conditions free from disturbances.

Instead, the present invention uses a suitable source of light with a stand-by lamp.

US Patent 3,867,628 for Brown discloses a receiver for pulsed light which could be used in level measuring apparatus. This receiver, however, provides no means for checking the integrity of the received light nor any means to ensure that the received light has indeed been transmitted.

The present invention endeavours to provide a level measurement device having great accuracy and long term reliability.

The present invention therefore proposes a device for measuring the level of a surface which comprises:

— a light generator which is spaced from said surface and includes a source of light for projecting a concentrated beam of light onto said surface along a first line, such that said beam of light illuminates a limited area of said surface, and

— a light receiver which is spaced from said surface and includes light sensitive means and means for focusing onto said light sensitive means the light diffused from said limited area of said surface along a second line arranged at an angle to said first line so as to produce an image of said limited area, the arrangement being such that said position of said image on said light sensitive means varies with changes in the level of said surface and said light sensitive means are responsive to the position of said image thereon, said light receiver also including sensor means producing an output signal that indicates the position of said image on said light means, said device being characterized by the fact that said light generator includes a further source of light, selector means able to cooperate with said first-mentioned and said further sources of light so as to effect operation of a selected one thereof, means responsive to said selected source of light so as to cause said selector means to select said further source of light when a failure of said selected source of light is detected, and alarm means for indicating that a failure of said selected source of light has been detected.

Hereinafter a description is given, as a non-restrictive example, of two preferred embodiments of the invention with reference to the attached drawings, wherein:—

Fig. 1 shows diagrammatically the mechanical and optical part of the invention;

Fig. 2 shows a block diagram of a circuit of a generator of light pulses for a pulsating light embodiment;

Fig. 3 shows a block diagram of a circuit of the receiver unit of the pulsating light embodiment;

Fig. 4 shows a block diagram of an electric circuit of a light generator for a continuous light embodiment;

Fig. 5 shows a block diagram of an electric circuit of a receiver unit for the continuous light embodiment.

In the drawings like parts or parts having like functions bear the same reference numbers.

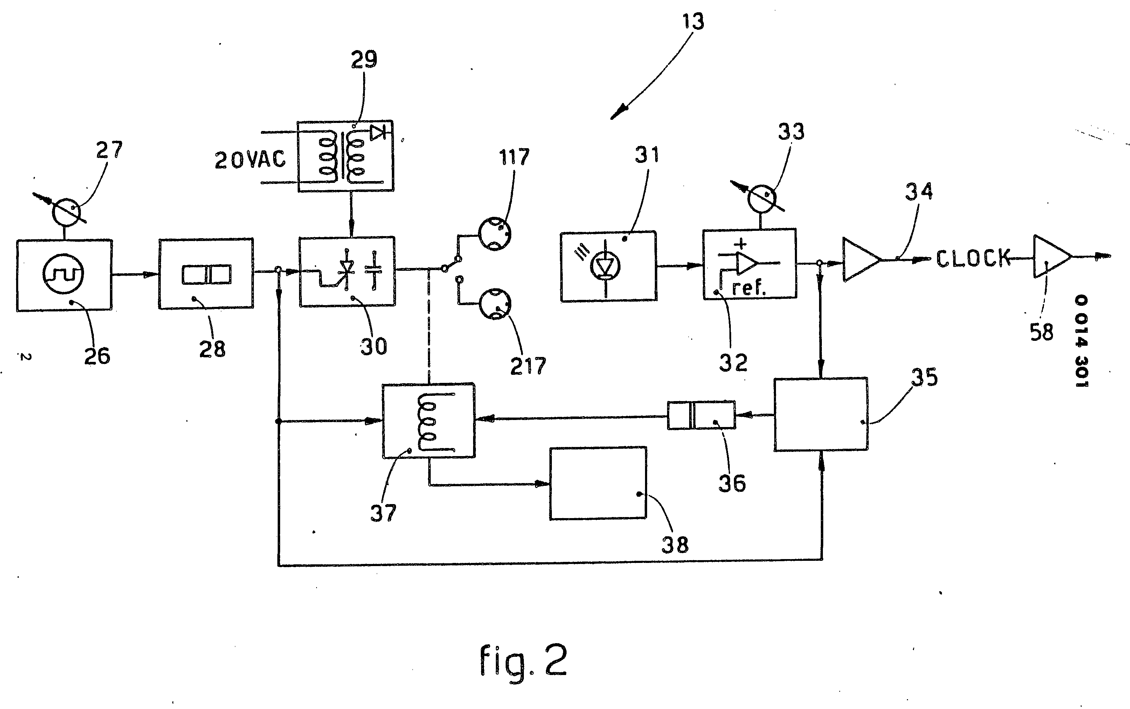

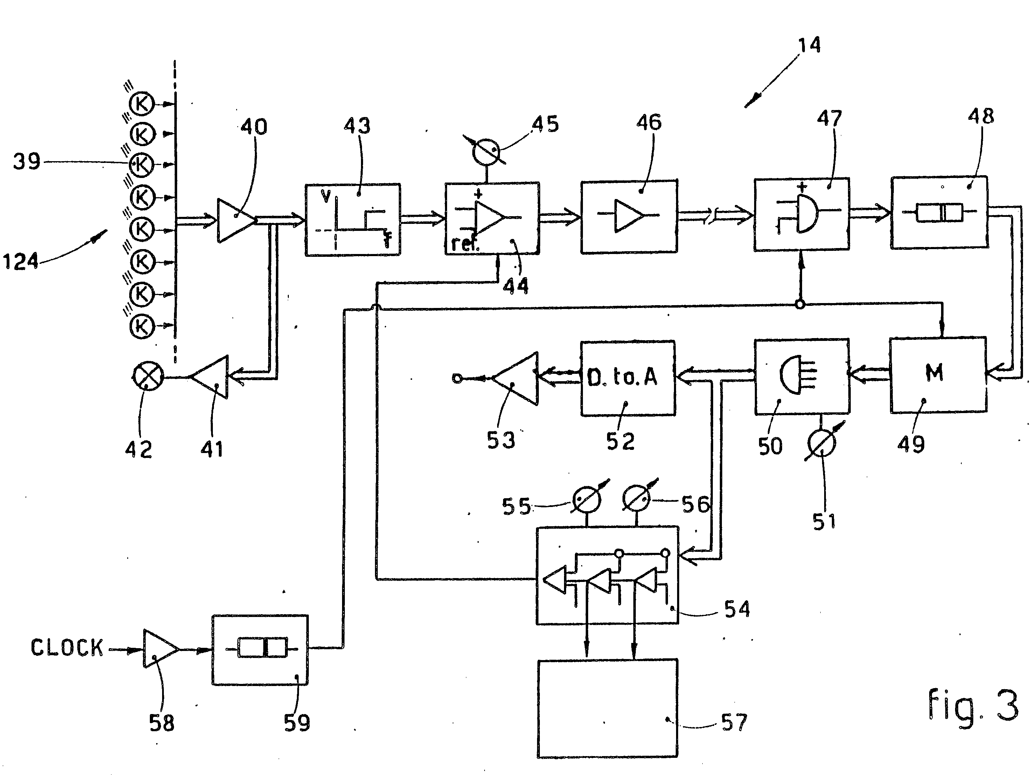

The optical part 10 of the invention provides for the light emission, and 11 is the optical part of the invention which detects such emissions as reflected from the surface 12. In Fig. 2, 13 is the light pulse generator unit of the pulsating light embodiment and in Fig. 3, 14 is the receiver unit for the light pulses.

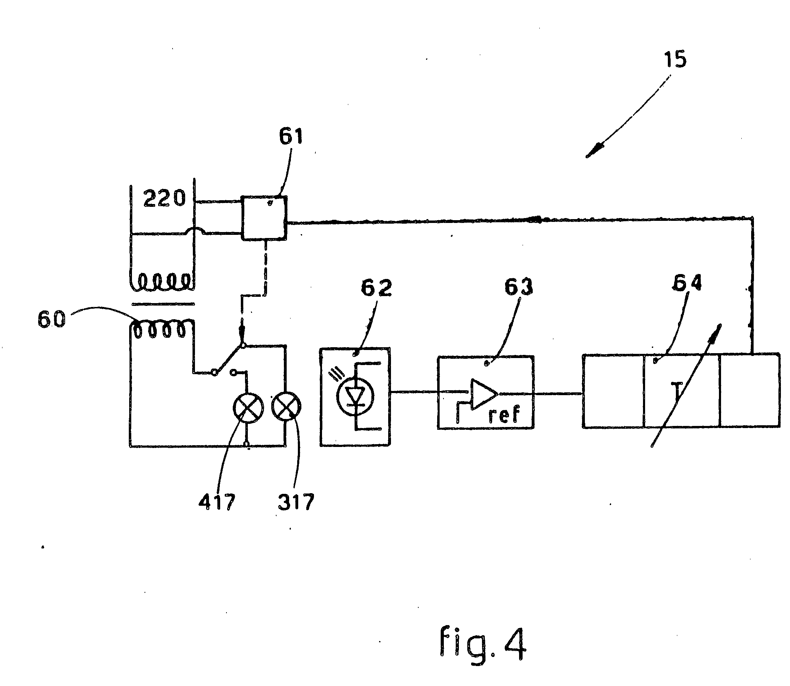

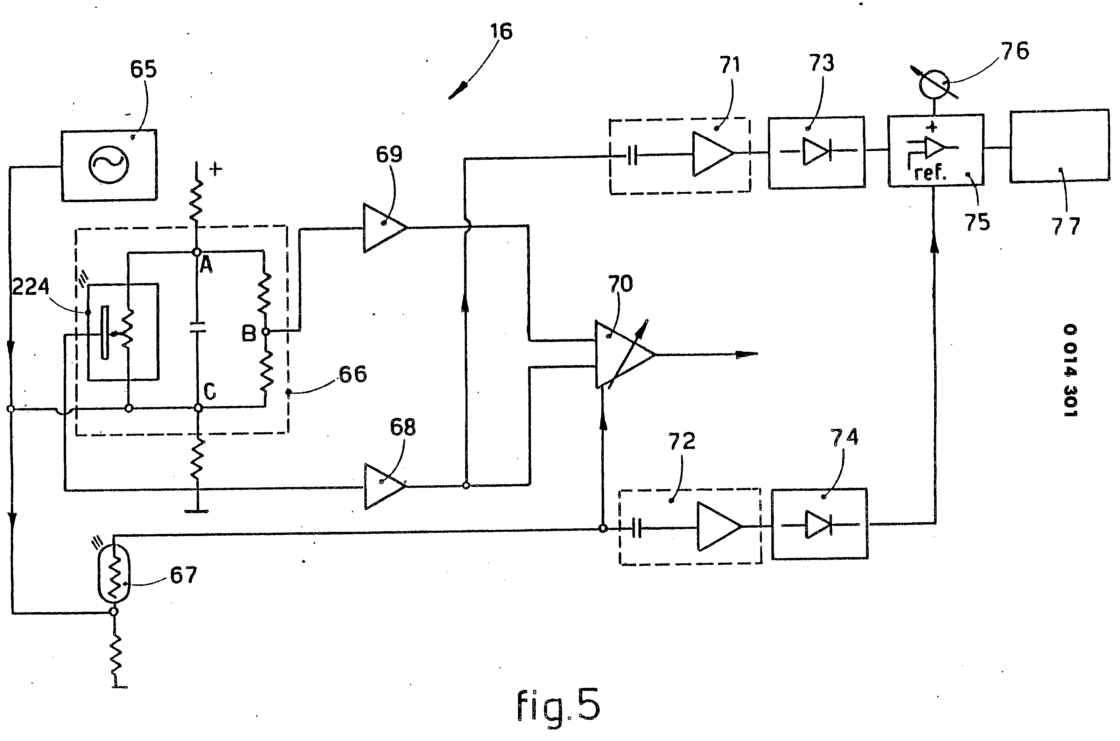

In Fig. 4, 15 is the light generator unit of the continuous light embodiment and in Fig. 5, 16 is the light receiver of the continuous light embodiment.

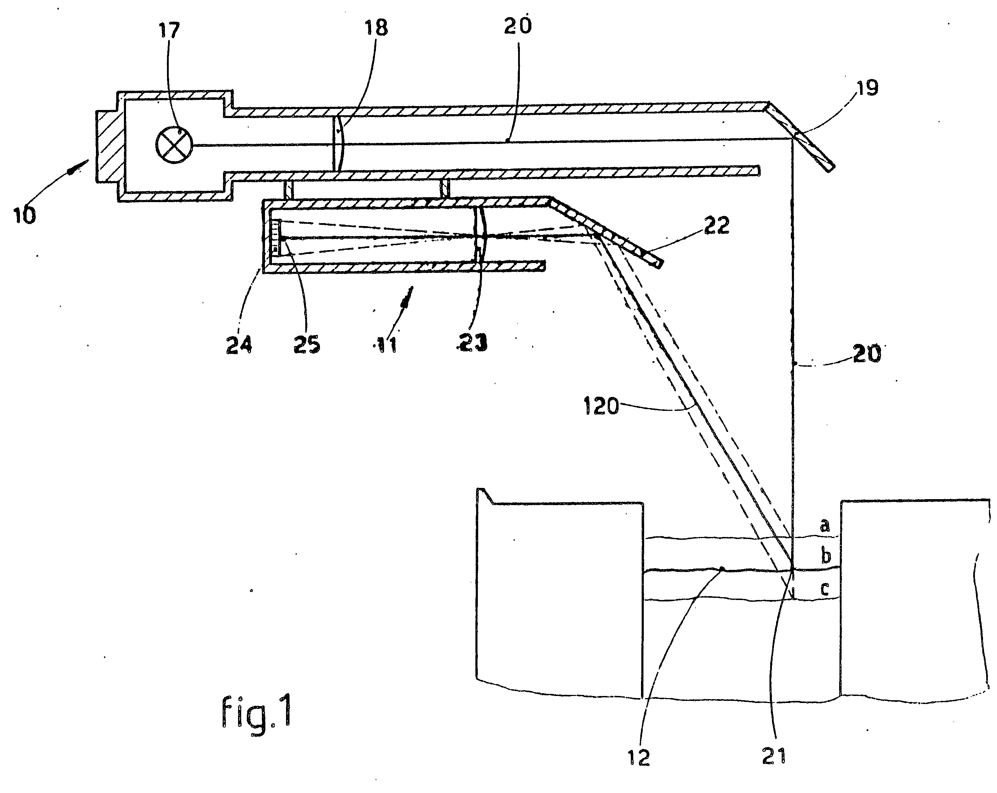

In Fig. 1, 17 is generically the light source connected to light pulse generator 13, or to 15. In Fig. 2, 117 and 217 indicate, for instance, two or more stroboscopic lamps of the pulsating light embodiment and in Fig. 4, 317 and 417 indicate, for example, two or more lamps of the continuous light embodiment. In Fig. 1, 18 is a lens or group of lenses suitable for focusing the light spot 21 on the surface 12 by means of mirror shown at 19, which directs a concentrated beam 20 generated by a source of light 17 onto the surface 12; 120 is the line along which the light spot 21 is detected; 22 is a reflecting mirror for reflecting the light beam 120 arriving from the surface 12 and 23 is a lens or group of lenses suitable for focusing the image of the light spot 21 on a sensitive photo-element 24 sensitive to the light spot 21.

Fig. 3 shows the element 124 sensitive to the light spot 21, which in the pulsating light embodiment consists of a plurality of electro-optical or target sensors, and at 224, Fig. 5 shows an optical potentiometer sensitive to the light spot 21 in the continuous light embodiment.

In Fig. 1, 25 is the image of the light spot 21 on the sensitive element 24. In Fig. 2, 26 is a generator of electric pulses with an adjustable frequency, while 27 is for setting the frequency and is connected to generator 26; 28 is a monostable frequency generator circuit; 29 is the power source for the modulator 30; 30 is the modulator of lamps 117 and 217.

In Fig. 2, 31 is a photosensor responsive to lamps 217 and 117 when switched on; 32 is an adjustable threshold trigger circuit and 33 is the means for adjusting the level of the threshold of circuit 32.

34 is a power amplifier for the pulses generated by the circuit 32.

35 is a comparator circuit which checks the simultaneous presence of the pulses originating from circuit 28 and the flash generated by lamp 117 or 217 when switched on; 36 is a delaying block which controls the switching-on of one or the other of lamps 117 and 217; 37 is the electromechanical device which effects the switchover of the lamps 117 and 217.

In Fig. 3, 39 is one of the sensors which form the sensitive element 124; 40 is a group of signal amplifiers (one for each of the sensors);

41 is the amplifier of the average level of light received by the sensors 39; 42 is a lamp controlled in a feedback manner by amplifier 41, and its task is to keep the average level of illumination of the sensitive element 124 constant.

43 is a high-pass filter and 44 is a group of adjustable threshold level comparators, one for each sensor 39.

45 is a potentiometer for setting the minimum level of threshold of the comparator group 44, and 46 is a group of power amplifiers, one for each sensor 39; 47 is a line receiver with qualification controlled by the clock signal coming from generator 13 (Fig. 2) and processed by the blocks 58 and 59; 48 is a pulse generator, one for each sensor 39; 49 is a memory in which is stored the logical information coming from the sensors 39, and 50 is a circuit for the selection of the information coming from sensors 39; 51 is a commutator which controls the action of the selection circuit 50.

52 is a digital-to-analog converter and 53 is an amplifier for the analogue signal coming from the converter 52; 54 is a circuit which outputs an analogue signal proportional to the number of lit sensors 39, and said signal controls the threshold of group 44.

55 is a device which allows the selection of the maximum number of lit sensors 39; 56 is an analogue device like 55 for controlling the selection of the minimum number of lit sensors 39, and 57 is an alarm device which is actuated when the number of activated sensors is respectively higher than the maximum number determined by device 55 and lower than the minimum number determined by device 56.

The number of lit sensors is chosen according to image form, uniformity and the nature of the edge of the spot 21 falling on the sensors 124 and for the purpose of "seeing" said spot as uniformly as possible.

58 is the receiver of clock pulses arriving from the generator group 13, and 59 is a pulse generator in series with the receiver 58.

In Fig. 4, 60 is a transformer for the power to the generator 15 and 61 is the electromechanical system which provides for the selection of lamp 317 or lamp 417.

62 is the sensor which controls the correct working of the lamps 317, 417; 63 is the threshold circuit which processes the signal coming from the sensor 62; 64 is a timer which controls the switchover of lamp 317 or 417, at the moment when it is on, to the other stand-by lamp 317 or 417.

In Fig. 5, 65 is a generator of a signal with a constant frequency; 66 is a wheatstone bridge; 67 is a photoresistance sensitive to the ambient light; 68 is a d.c. separator-amplifier; 69 is a d.c. separator-amplifier.

70 is an amplifier the gain of which is varied with the ambient illumination by means of photoresistance 67; 71 is a high-pass filter amplifier; 72 is a high-pass filter amplifier; 73 is a peak detector; 74 is another peak detector, while 75 is an adjustable threshold circuit; 76 is a control which can be operated by hand to set the threshold of circuit 75, and 77 is an alarm device for indicating insufficient contrast on the photopotentiometer 224.

With reference to the attached drawings a description of how the apparatus in question works is given hereinafter.

The measurement of the level of the molten metal surface 12 (Fig. 1) is executed by projecting thereon a concentrated beam 20 generated by a source of light 17, a lens or a system of lenses 18 and a mirror 19. A light spot 21 is thus projected onto the surface 12.

Said spot produces the image 25 on the sensitive element 24 with the help of mirror 22 and lens or lenses 23.

It is important to note that the optical axis 120 of the receiver system of image 25 is disposed at an angle with respect to the projection axis coincident with beam 20.

Such an arrangement causes the variation of the position of image 25 of the light spot 21 on element 24 in response to sudden changes in the level of surface 12.

The sensitive element 24 is capable of detecting the position and intensity of the image 25 projected theron.

To eliminate disturbances, interference or false signals, the sensitive element 24 can be continuously illuminated by lamp 42 (Fig. 3) or can be continuously compared with the background or ambient intensity measured by photoresistor 67 (Fig. 5).

The light beam 20 (Fig. 1) can be deviated by mirror 19 or can act directly on the surface 12 of the bath.

In the same way the sensitive element 24 can read the light signal 21 as reflected by mirror 22 or can detect light signal 21 directly.

The light signals, whether departing or arriving, are piloted and controlled by control circuits, which are respectively signal generator units 13 or 15 and receiver units 14 or 16.

The embodiments shown herein as examples have either a pulsating source of light (circuits 13 and 14) or continuous or constant source of light (circuits 15 and 16).

As said before, this device comprises two sections generically; the first section (13 and 15) provides for actuating the light source 17, while the second section (14 and 16) transforms the optical information received by the sensitive element 24 into an electrical signal.

The pulsating light embodiment functions as follows. The generator 13 (Fig. 2) produces the flashes of light through the pulse generator 26, the frequency setting means 27, the monostable impulse emitter circuit 28, the power supply 29 for the modulator 30, the modulator 30 for lamps 117 and 217, and lamp 117 or 217.

The trigger circuit 32 is activated by electrical signals coming from the light sensor 31 when they have an adequate intensity, during the flashes of lamp 117 or 217.

The signal of the trigger circuit 32 is sent to the comparison circuit 35, which verifies that the pulse generated by the monostable circuit 28 is simultaneous with the flash generated by the lamp 117 or 217.

If the two signals are not emitted at the same time, the comparison circuit 35, after a delay obtained by the delaying block 36, provides for switching on the stand-by lamp 117 or 217 and activates an alarm by means of device 38.

The signal from the trigger circuit 32 is also amplified by amplifier 34 and sent as a clock signal to the receiver group 14 (Fig. 3).

Effectively, it is from the generator 13 that there are obtained a flash of light and therefore the clock signal that warns the receiver 14 of the presence of a flash to be observed by the sensors 39 (Fig. 3).

The sensors 39 sense the light arriving from the surface 12 and each of them outputs an electric signal proportional to the intensity by which it is illuminated.

In particular, the sensors 39 on which the image 25 of the flashing spot 21 is formed, output electrical pulses contemporary with the flash and having an amplitude proportional to the intensity of the spot 21 and therefore of the image 25.

The electrical signals of sensors 39, amplified by the amplifying group 40, are sent to a high-pass filter 43, which passes the pulsating signal and blocks the signals changing slowly in time, thus eliminating the signals caused by the background illumination.

In order to ensure the constancy of the response speed of each sensor 39, the continuous background illumination of the same is kept constant by means of a lamp 42 by controlling the amplifier 41 driving lamp 42 using the average light level of the sensors 39.

The level comparator group 44 effects a selection based on amplitude, allowing the passage of pulses having an intensity higher than a certain threshold value, which is adjustable by the minimum threshold level adjustment means 45.

If the pulses have an adequate intensity, they pass on to the amplifier 46 and are transmitted to line receiver 47. The latter allows the passage of only the signals which arrive at the same time as the clock signals arriving through the pulse receiver 58 and the pulse emitter 59 of generator 13.

This is a safety provision whereby the processing part is enabled to discard illegitimate light emissions. In this way light pulses not coinciding in time with the flash of lamp 117 or 217 are not taken into consideration.

As a further assurance of immunity to disturbances, the memory 49 fed by pulse emitter 48 and the selection circuit 50 provide for recognising as legitimate only those signals which are repeated equally two, three or four times during the sucessive flashes produced by generator 13. These selection criteria are controlled by commutator 51.

A digital-to-analogue converter 52 follows and outputs a signal correlated with the position of the activated sensors 39 and thus with the level of the molten metal surface 12 to be measured.

If, for instance, the image 25 is detected by three sensors 39, there will be three corresponding electrical signals of which the average level is determined by the receiver 14 and, based on this average level, the receiver calculates the position of the spot 21 as a function of the level of surface 12 to be measured.

The sensors 39 which do not receive the image 25 supply a signal correlated with the intensity of the ambient illumination, which does not have a sufficient amplitude, after passing through the high-pass filter 43, to overcome the trigger threshold of the level comparator group 44.

The receiver 14 then checks, through the circuit 54, that the number of sensors 39 activated falls between predetermined and adjustable limits and supplies in the contrary case a signal to activate the alarm device 57.

The circuit 54 has a feedback action which acts on the threshold of the level comparator group 44 in order to adjust automatically the number of sensors 39 activated.

We shall now proceed to describe the continuous light embodiment. This embodiment is formed with a light generator 15 (Fig. 4) and a receiver 16 (Fig. 5).

The task of the light generator 15 is to supply the optical part 10 with a continuous light that produces a light spot 21 on the surface which can be easily perceived by the sensitive element 224 and distinguished from other light sources which might create disturbance.

The generator 15 is capable of controlling the correct working of the lamp 317 by means of the sensor 62, providing automatically for switching on the other lamp 417, in case of a defect of the first lamp, through the threshold circuit 63, the timer 64 and the electromechanical system 61.

The receiver 16 (Fig. 5) of the continuous light embodiment uses the signal produced by the photopotentiometer 224, as a function of the position of the image 25 and therefore of the level of surface 12 to be measured, and, through the photoresistance 67, a signal correlated to the ambient light intensity.

The receiver 16 verifies, by means of an a.c. signal supplied by the a.c. signal generator 65, through the photopotentiometer 224, the photoresitance 67, the amplifier-separator 68, the high-pass filters 71 and 72, the peak detectors 73 and 74 and the adjustable threshold circuit 75, that there is sufficient contrast to the photopotentiometer 224 between the image 25 and the ambient light.

The output signal of the adjustable threshold circuit 75 actuates, in case of insufficient contrast, an alarm device 77 which signals the low reliability of the indication supplied by the adjustable gain amplifier 70.

An automatic control of the gain of amplifier 70 compensates within certain limits for the decrease in sensitivity of the photopotentiometer 224 due to the fading contrast between the generally constant intensity of the image 25 and the variable intensity of the ambient light.

By means of this control the relationship of the output signal of the adjustable gain amplifier 70 to the level of surface 12 is rendered independent of the variation in the sensitivity of the photopotentiometer 224.

The control is achieved by the photoresistance 67, which adjust the gain amplifier 70 in proportion to the intensity of the perceived ambient light.

Two possible embodiments of the invention have been described, but other variants are possible. Thus it is possible to vary the dimensions; it is possible to add to the optical system some optical interference filters; it is possible to vary the spectra of the source of light and the receiver; it is possible to work with selected-intensity and frequency-modulated source of light by synchronising the receiver with the source of light.

It is possible to use a continuous monochromatic source coupled to a receiver provided with an optical interference filter; and it is possible to use modulated monochromatic light and synchronised reception with optical interference filter.

**Claims**

1. A level measurement device for measuring the level of a surface (12), comprising:

— a light generator (13, 15) which is spaced from said surface and includes a source of light (17, 117, 317) for projecting a concentrated beam of light on to said surface along a first line (20), such that said beam of light illuminates a limited area (21) of said surface, and

— a light receiver (14, 16) which is spaced from said surface and includes light sensitive means (24) and means (23) for focusing onto said light sensitive means (24) the light diffused from said limited area (21) of said surface along a second line (120) arranged at an angle to said first line (20) so as to produce an image (25) of said limited area (21), the arrangement being such that said position of said image (25) on said light sensitive means (24) varies with changes in the level of said surface (12) and said light sensitive means (24) are responsive to the position of said image (25) thereon, said light receiver (14, 16) including sensor means (124, 224) producing an output signal that indicates the position of said image (25) on said light sensitive means (24), said device being characterized by the fact that said light generator (13, 15) includes a further light source (217, 417), selector means (37, 61) able to cooperate with said first-mentioned and further light sources so as to effect operation of a selected one thereof, means (31, 62) responsive to said selected light source so as to cause said selector means (37, 61) to select said further source of light when a failure of said selected source of light is detected, and alarm means (57, 77) for indicating that a failure of said selected source of light has been detected.

2. The level measurement device of Claim 1, characterized by the fact that said light generator (13, 15) includes means (26, 30) for actuating said source of light (17) in a periodic manner and means (32, 34) for producing a train of pulses which are synchronised with said periodic actuation of said sources of light.

3. The level measurement device as in Claim 2, characterized by the fact that said light sensitive means (24) includes a plurality of light sensitive elements (124) of which each produces an electrical signal in response to the presence of light, said image (25) of said lighted area (21) of said surface (12) falling on different said light sensitive elements (124) as said position of said image (25) on said light sensitive means varies and including:

— filter means (43) responsive to said light sensitive elements (124) for propagating only signals therefrom which have a frequency greater than a predetermined frequency which is less than the frequency of said synchronizing pulses,

— level comparator means (44) responsive to said filter means (43) for propagating only signals therefrom which have an amplitude greater than a threshold,

— line receiver means (47) responsive to said level comparator means (44) and to said synchronizing pulses from said light generator (14) for propagating only signals coincident in time with said synchronizing pulses, and

— image position determining means (48—57) responsive to said line receiver means (47) for determining which of said light sensitive elements (124) has generated a signal received from said line receiver means (47) and for producing an output signal on the basis of such determination, thereby indicating the position of said image (25) on said light sensitive means (24).

4. The level measurement device as in Claim 3, characterized by the fact that said image position determining means (48—57) is responsive only to signals which occur at least twice and in coincidence with successive said synchronizing pulses.

5. The level measurement device of Claim 2, characterized by the fact that said image position determining means (48—57) includes means responsive to the number of signals simultaneously generated by respective said light sensitive elements (124) and simultaneously received from said line receiver means (47) for automatically adjusting said threshold of said level comparator means (44) so as to maintain substantially said number of signals within a range bounded by preselected maximum and minimum limits, and includes alarm means (57) for providing an indication when said number of signals is outside said range.

6. The level measurement device of Claim 2, characterized by including a source of illumination (41) adjacent to said light sensitive means (124) for controlling the intensity of said illumination source (42) so as to maintain a substantially constant level of ambient illumination on said light sensitive means (24).

7. The level measurement device as in Claim 1, characterized by the facts that said concentrated beam of light is produced substantially continuously, and that said light sensitive means (224) produces an electrical signal which varies as a function of the position of said image on said light sensitive means, and that a light sensitive element (67) is positioned in the vicinity of said light sensitive means (224) and is responsive to the intensity of ambient light, and that a variable gain amplifier (70) responsive to said light sensitive means (67) is provided for producing an output signal, said variable gain of said amplifier (70) being controlled by said light sensitive element (67).

8. The level measurement device of Claim 7, characterized by including means (75) responsive to said light sensitive means (224) and to said light sensitive element (67) for comparing the intensity of said image (25) with the intensity of the ambient light, and alarm means (77) for producing an indication when the contrast between said intensities of said image (25) and said ambient light falls below a predetermined value.

**Revendications**

1. Dispositif pour mesurer le niveau d'une surface (12), qui comprend:

— un générateur de lumière (13, 15) qui est espacé de ladite surface et comprend une source de lumière (17, 117, 317) servant à projeter un faisceau concentré de lumière sur ladite surface, le long d'une première ligne (20), de telle manière que ledit faisceau de lumière éclaire une zone limitée (21) de ladite surface, et

— un récepteur de lumière (14, 16) qui est espacé de ladite surface et comprend des moyens sensibles à la lumière (24) et des moyens (23) servant à focaliser sur lesdits moyens sensibles à la lumière (24) la lumière diffusée par ladite zone limitée (21) de ladite surface, le long d'une deuxième ligne (120) disposée en formant un angle avec la première ligne (20) de façon à produire une image (25) de ladite zone limitée (21) l'arrangement étant tel que ladite position de ladite image (25) sur lesdits moyens sensibles à la lumière (24) varie avec les variations du niveau de ladite surface (12) et que lesdits moyens sensibles à la lumière (24) répondent à la position de ladite image (25) sur eux, ledit récepteur de lumière (14, 16) comprenant également des capteurs (124, 224) qui produisent un signal de sortie qui indique la position de ladite image (25) sur lesdits moyens sensibles à la lumière (24), ledit dispositif étant caractérisé par le fait que ledit générateur de lumière (13, 15) comprend une autre source de lumière (217, 417), des moyens sélecteurs (37, 61) capables de coopérer avec ladite source de lumière mentionnée en premier et avec ladite autre source de lumière pour déterminer le fonctionnement d'une sélectionnée de ces sources, des moyens (31, 62) qui répondent à ladite source de lumière sélectionée de manière à amener lesdits moyens sélecteurs (37, 61) à sélectionner ladite autre source de lumière lorsqu'une défaillance de ladite source de lumière sélectionnée est détectée, et des moyens d'alarme (57, 77) servant à indiquer qu'une défaillance de ladite source de lumière sélectionnée à été détectée.

2. Dispositif de mesure de niveau de la revendication 1, caractérisé par le fait que ledit générateur de lumière (13, 15) comprend des moyens (26, 30) servant à actionner ladite source de lumière (17) d'une façon périodique et des moyens (32, 34) servant à produire un train d'impulsions qui sont synchronisées avec ledit actionnement périodique desdites sources de lumière.

3. Dispositif de mesure de niveau selon la revendication 2, caractérisé par le fait que lesdits moyens sensibles à la lumière (24) comprennent une pluralité d'éléments sensibles à la lumière (124), dont chacun produit un signal électrique en réponse à la présence de lumière, ladite image (25) de ladite région éclairée (21) de ladite surface (12) tombant sur un élément sensible à la lumière (124) diffèrent lorsque ladite position de ladite image (25) sur ledit élément sensible à la lumière varie et comprenant: des moyens formant filtre (43) qui répondent auxdits éléments sensibles à la lumière (124) en ne propageant que les signaux qui en proviennent qui ont une fréquence supérieure à une fréquence prédéterminée qui est inférieure à la fréquence desdites impulsions de synchronisation; des moyens comparateurs de niveau (44) qui répondent auxdits moyens formant filtre (43) en propageant uniquement les signaux qui en proviennent qui ont une amplitude supérieure à un seuil donné; des moyens récepteurs de ligne (47) qui répondent auxdits moyens comparateurs de niveau (44) et auxdites impulsions de synchronisation issues dudit générateur de lumière (14) en propageant uniquement les signaux qui coïncient dans le temps avec lesdites impulsions de synchronisation; et des moyens (48—57) de détermination de la position de l'image qui répondent auxdits moyens récepteurs de ligne (47) en déterminant lequel desdits éléments sensibles à la lumière (124) a engendré un signal reçu par lesdits moyens récepteurs de ligne (47) et en produisant un signal de sortie sur la base de cette détermination, en indiquant de cette façon la position de ladite image (25) sur lesdits moyens sensibles à la lumière (24).

4. Dispositif de mesure de niveau selon la revendication 3, caractérisé par le fait que lesdits moyens de détermination de la position de l'image (48—57) répondent uniquement à des signaux qui se présentent au moins deux fois et en coïncidence avec des impulsions successives desdites impulsions de synchronisation.

5. Dispositif de mesure de niveau de la revendication 2, caractérisé par le fait que lesdits moyens de détermination de la position de l'image (48—57) comprennent des moyens qui répondent au nombre de signaux engendrés simultanément par lesdits éléments sensibles à la lumière (124) et et qui sont reçus simultanément par lesdits moyens récepteurs de ligne (47) en ajustant automatiquement ledit seuil desdits moyens comparateur de niveau (44) de manière à maintenir sensiblement ledit nombre de signaux dans un intervalle limité à des limites maximum et minimum présélectionnées, et comprennent des moyens d'alarme (57) servant à donner une indication lorsque ledit nombre de signaux se trouve à l'extérieur dudit intervalle.

6. Dispositif de mesure de niveau de la revendication 2, caractérisé en ce qu'il comprend une source d'éclairage (41) adjacente auxdits moyens sensibles à la lumière (124) et servant à commander l'intensité de ladite source d'éclairage (42) de manière à maintenir un niveau sensiblement constant d'éclairage ambiant sur lesdits moyens sensibles à la lumière (24).

7. Dispositif de mesure de niveau selon la revendication 1, caractérisé par le fait que ledit faisceau de lumière concentré est produit de façon sensiblement continue et que lesdits moyens sensibles à la lumière (224) produisent un signal électrique qui varie en fonction de la position de ladite image sur lesdits moyens sensibles à la lumière et qu'un élément sensible à la lumière (67) est positionné dans le voisinage desdits moyens sensibles à la lumière (224) et répond à l'intensité de la lumière ambiante et qu'un amplificateur à gain variable (70) répondant auxdits moyens sensibles à la lumière (67) est prévu pour produire un signal de sortie, ledit gain variable dudit amplificateur (70) étant commandé par ledit élément sensible à la lumière (67).

8. Dispositif de mesure selon la revendication 7, caractérisé en ce qu'il comprend des moyens (75) répondant auxdits moyens sensibles à la lumière (224) et audit élément sensible à la lumière (67), et servant à comparer l'intensité de ladite image (25) à l'intensité de la lumière ambiante, et des moyens d'alarme (77) servant à produire une indication lorsque le contraste entre lesdites intensités de ladite image (25) et de ladite lumière ambiante tombe au-dessous d'une valeur prédéterminée.

**Patentansprüche**

1. Vorrichtung zum Messen des Füllstandes einer Oberfläche (12), mit einem Lichterzeuger (13, 15), der im Abstand von der Oberfläche angeordnet ist und eine Lichtquelle (17, 117, 317) aufweist, die einen gebündelten Lichtstrahl auf die Oberfläche entlang einer ersten Linie (20) sendet, derart, daß dieser Lichtstrahl einen begrenzten Bereich (21) der Oberfläche beleuchtet; ferner mit einem im Abstand von der Oberfläche angeordneten Lichtempfänger (14, 16), der mit lichtempfindlichen Organen (24) sowie mit Fokussiermitteln (23) versehen ist, die das von dem begrenzten Bereich (21) entlang einer zweiten, in einem Winkel zur ersten Linie (20) verlaufenden Linie (120) reflektierte Licht auf die lichtempfindlichen Organe (24) richten, damit ein Bild (25) des begrenzten Bereiches (21) entsteht, wobie die Lage des Bildes (25) auf den lichtempfindlichen Organen (24) sich bei einem Wechsel des Füllstandes verändert und die lichtempfindlichen Organe (24) auf die Lage des Bildes (25) ansprechen, wobei ferner der Lichtempfänger (14, 16) mit Sensoren (124, 224) versehen ist, die ein Ausgangssignal hervorbringen, das die Lage des Bildes (25) auf den lichtempfindlichen Organen (24) anzeigt, dadurch gekennzeichnet, daß der Lichterzeuger (13, 15) eine weitere Lichtquelle (217, 417) sowie mit der ersten und der weiteren Lichtquelle zusammenwirkende Wählorgane (31, 62) aufweist, um den Betrieb einer gewählten Lichtquelle zu bewirken, ferner daß auf die ausgewählte Lichtquelle ansprechende Organe (31, 62) vorgesehen sind, die die Wählorgane (31, 62) veranlassen, die weitere Lichtquelle zu wählen, wenn ein Ausfall der gewählten Lichtquelle festgestellt wird, wobei weiters eine Alarmvorrichtung (57, 77) vorgesehen ist, die anzeigt, daß ein Ausfall der ausgewählten Lichtquelle festgestellt wurde.

2. Vorrichtung nach Anspruch 1, dadurch gekennzeichnet, daß der Licherzeuger (13, 15) Mittel (26, 30) zur periodischen Betätigung der Lichtquelle (17) aufweist sowie Mittel (32, 34) zur Erzeugung einer Reihe von Impulsen besitzt, die mit der periodischen Betätigung der Lichtquellen synchronisiert sind.

3. Vorrichtung nach Anspruch 2, dadurch gekennzeichnet, daß die lichtempfindlichen Organe (24) eine Mehrzahl von lichtempfindlichen Elementen (124) aufweisen, von denen jedes in Abhängigkeit vom Vorhandensein von Licht ein elektrisches Signal erzeugt, daß ferner das Bild (25) des beleuchteten Bereiches (21) der Oberfläche (12) auf verschiedene der lichtempfindlichen Elemente (124) fällt, wenn sich die Stellung des Bildes (25) auf den lichtempfindlichen Organen ändert, wobei vorgesehen sind:

Filtermittel (43), die auf die lichtempfindlichen Elemente (124) ansprechen und nur solche von diesen kommende Signale weiterleiten, die eine größere Frequenz besitzen als eine vorgegebene Fréquenz, wobei letztere kleiner als die Frequenz der synchronisierten Impulse ist,

Vergleichermittel (44), die auf die Filtermittel ansprechen und nur solche von diesen kommende Signale weiterleiten, die eine über einem Schwellenwert liegende Amplitude besitzen,

Empfängermittel (47), die auf die Vergleichermittel und die synchronisierten Impulse des Lichterzeugers (14) ansprechen und nur solche Signale weiterleiten, die zeitlich mit den synchronisierten Impulsen übereinstimmen, und

Mittel (48—57) zur Bestimmung der Lage des Bildes, die auf die Empfängermittel (47) ansprechen und bestimmen, welches der lichtempfindlichen Elements (124) ein von den Empfängermitteln (47) empfangenes Signal erzeugt hat, und die ein auf einer derartigen Bestimmung basierendes Ausgangssignal abgeben und damit die Lage des Bildes (25) auf den lichtempfindlichen Organen (24) anzeigen.

4. Vorrichtung nach Anspruch 3, dadurch gekennzeichnet, daß die Mittel (48—57) zur Bestimmung der Lage des Bildes nur auf solche Signale ansprechen, die mindestens zweimal und gleichzeitig mit den synchronisierten Impulsen auftreten.

5. Vorrichtung nach Anspruch 2, dadurch gekennzeichnet, daß die Mittel (48—57) zur Bestimmung der Lage des Bildes Mittel aufweisen, die auf die Anzahl der Signal ansprechen, die gleichzeitig von den lichtempfindlichen Elementen (124) erzeugt und von den Empfängermitteln (47) empfangen werden, um die Schwelle der Vergleichermittel (44) automatisch einzustellen und die Anzahl der Signale in einem durch vorgegebene Grenzen begrenzten Bereich zu halten, wobei Alarmmittel (57) vorgesehen sind, die anzeigen, wenn die Anzahl der Signale außerhalb dieses Bereiches liegt.

6. Vorrichtung nach Anspruch 2, dadurch gekennzeichnet, daß eine Leuchtquelle (42) nahe den lichtempfindlichen Elementen (124) vorgesehen ist, wobei die Intensität dieser Leuchtquelle (42) kontrolliert wird, um eine im Wesentlichen konstante Stärke des Umgebungslichtes der lichtempfindlichen Mittel (24) zu erhalten.

7. Vorrichtung nach Anspruch 1, dadurch gekennzeichnet, daß der gebündelte Lichtstrahl im Wesentlichen kontinuierlich erzeugt wird und daß die lichtempfindlichen Mittel (224) ein elektrisches Signal erzeugen, das als Funktion der Stellung des Bildes auf den lichtempfindlichen Mitteln verändert wird, und daß ein lichtempfindliches Element (67) in Nähe der lichtempfindlichen Mittel (224) angeordnet und auf die Intensität des Umgebungslichtes ansprechend ausgebildet ist, wobei ein veränderbarer, auf das lichtempfindliche Element (67) ansprechender Verstärker zur Bildung eines Ausgangssignales vorgesehen ist, und der veränderbare Verstärkungsgrad des Verstärkers (70) durch das lichtempfindliche Element (67) kontrolliert wird.

8. Vorrichtung nach Anspruch 7, dadurch gekennzeichnet, daß Mittel (75) vorgesehen sind, die auf die lichtempfindlichen Mittel (224) und das lichtempfindliche Element (67) ansprechen, um die Intensität des Bildes (25) mit der Intensität des Umgegungslichtes zu vergleichen, wobei Alarmmittel (77) vorgesehen sind, die eine Anzeige hervorbringen, wenn der Kontrast zwischen den Intensitäten des Bildes (25) und des Umgebungslichtes unter einen vorgegebenen Wert fallen.

fig.1

0 014 301

fig. 2

0 014 301

fig. 3

D. to. A.

CLOCK

14

39  124  40  41  42  43  44  45  46  47  48  49  50  51  52  53  54  55  56  57  58  59

3

fig. 4

fig.5

0 014 301